# EUROPÄISCHE PATENTSCHRIFT

(11) **EP 4 061 573 B1**
(45) Veröffentlichungstag und Bekanntmachung des Hinweises auf die Patenterteilung: **24.07.2024**
(21) Anmeldenummer: 20807311.4
(22) Anmeldetag: 12.11.2020
(51) Int. Cl.: B23K 26/00, B23K 26/244, B23K 26/38, B23K 31/02, B23K 101/04, B23K 101/24

(54) **VERFAHREN ZUR HERSTELLUNG EINES BLECHBAUTEILS MIT EINEM ZUMINDEST TEILBEREICHSWEISE GESCHLOSSENEN QUERSCHNITT**
PROCESS FOR MANUFACTURING A SHEET METAL COMPONENT WITH AN AT LEAST PARTIALLY CLOSED CROSS-SECTION
PROCÉDÉ DE FABRICATION D'UN COMPOSANT EN FEUILLE DE MÉTAL AVEC UNE COUPE TRANSVERSALE AU MOINS PARTIELLEMENT FERMÉE

(30) Priorität: 22.11.2019 DE 102019218019
(43) Veröffentlichungstag der Anmeldung: 28.09.2022
(73) Patentinhaber: SIMPLON Fahrrad GmbH, 6971 Hard (AT)
(72) Erfinder: CHAN, Jia-uei, 40235 Düsseldorf (DE)
(74) Vertreter: Torggler & Hofmann Patentanwälte - Rankweil
(86) Internationale Anmeldenummer: PCT/EP2020/081813
(87) Internationale Veröffentlichungsnummer: WO 2021/099197

(56) Entgegenhaltungen:
- EP-A1- 2 130 638
- WO-A1-2018/227382
- DE-A1- 10 048 233
- DE-A1- 10 051 211
- DE-C1- 10 034 806
- US-A1- 2006 175 301

## Beschreibung

### Technisches Gebiet (Technical Field)

Die Erfindung betrifft ein Verfahren zur Herstellung eines Blechbauteils mit einem zumindest teilbereichsweise geschlossenen Querschnitt, welches mindestens zwei über eine stoffschlüssige Verbindung miteinander verbundene Blechteile umfasst sowie entsprechende Verwendungen.

### Technischer Hintergrund (Background Art)

Umgeformte Blechbauteile, beispielsweise mit einem hutförmigen Querschnitt, weisen einen Boden, daran anschließende und insbesondere abstehende Zargen und eine an den Zargen anschließende und insbesondere abstehende Flansche auf. Verfahren zum Herstellen eines geschlossenen Blechprofils (Profil mit geschlossenem Querschnitt), bei denen zwei Blechbauteile mit hutförmigem Querschnitt über ihre Flansche stoffschlüssig miteinander verbunden werden können, sind bekannt. Ferner ist aus der deutschen Offenlegungsschrift DE 10 2015 113 863 A1 bekannt, komplex umgeformte Blechbauteile zu einem teilbereichsweise geschlossenen, profilförmigen Rahmenelement miteinander stoffschlüssig zu verbinden.

Gattungsgemäße Verfahren sind beispielhaft beschrieben in den Schriften DE 100 48 233 A1 und DE 100 51 211 A1.

Die aus dem Stand der Technik bekannten, aus mehreren Blechteilen zusammengesetzte Blechbauteile weisen nicht unbedingt eine durchgehende, insbesondere dichte Verbindung zwischen den Blechteilen auf. Mit Blick auf eine filigrane und ästhetische Anmutung der Verbindung zwischen den Blechteilen und/oder am Rand- bzw. an der Schnittkontur des Blechbauteils besteht Optimierungspotential.

### Zusammenfassung der Erfindung (Summary of Invention)

Der Erfindung liegt somit die Aufgabe zu Grunde, ein Verfahren zur Herstellung eines Blechbauteils mit einem zumindest teilbereichsweise geschlossenen Querschnitt bereitzustellen, mit welchem eine filigrane und ästhetische Anmutung der Verbindung zwischen den Blechteilen und/oder am Rand- bzw. an der Schnittkontur des Blechbauteils hergestellt werden kann.

Gemäß einer ersten Lehre wird die Aufgabe durch ein Verfahren mit den Merkmalen des Patentanspruchs 1 gelöst.

Es wird ein Verfahren zur Herstellung eines Blechbauteils mit einem zumindest teilbereichsweise geschlossenen Querschnitt vorgeschlagen, welches mindestens zwei über eine stoffschlüssige Verbindung miteinander verbundene Blechteile umfasst, wobei das Verfahren folgende Schritte umfasst: - Bereitstellen eines ersten Blechteils und mindestens eines zweiten Blechteils, wobei das erste Blechteil und/oder das zweite Blechteil einen Boden, Zargen und Flansche aufweist, - Anordnen der beiden Blechbauteile derart, dass sie zumindest teilbereichsweise über ihre Flansche unter Ausbildung eines zumindest teilbereichsweise geschlossenen Querschnitts in Kontakt gelangen und Erzeugen einer stoffschlüssigen Verbindung zwischen den beiden Blechteilen.

Erfindungsgemäß werden nach dem Erzeugen der stoffschlüssigen Verbindung die Flansche zumindest teilbereichsweise unter Beibehaltung der stoffschlüssigen Verbindung abgeschnitten, derart, dass angrenzend an oder im Bereich der stoffschlüssigen Verbindung eine Schnittkontur an dem Blechbauteil erzeugt wird, welche anschließend thermisch beaufschlagt wird.

Nach dem stoffschlüssigen Verbinden der mindestens zwei Blechteile werden in einem ersten Schritt angrenzend an der stoffschlüssigen Verbindung zwischen den zwei Blechteilen, das heißt, unmittelbar angrenzend ohne Bereiche der stoffschlüssigen Verbindung zu entfernen, die Flansche der beiden Blechteile teilbereichsweise abgeschnitten und so eine Schnittkontur an dem Blechbauteil erzeugt. Der Abstand zur stoffschlüssigen Verbindung, quasi der Abstand der Schnittkontur zur stoffschlüssigen Verbindung, kann bis zu 10 mm, insbesondere bis zu 5 mm, vorzugsweise bis zu 3 mm, bevorzugt bis zu 2 mm betragen, wobei der Abstand beispielsweise > 0 mm ist. Alternativ können in dem ersten Schritt im Bereich der stoffschlüssigen Verbindung zwischen den zwei Blechteilen die Flansche der beiden Blechteile teilbereichsweise abgeschnitten werden, das heißt, dass Teile der stoffschlüssigen Verbindung mit entfernt werden, wobei jedoch sichergestellt werden sollte, dass noch ein ausreichender Bereich der stoffschlüssigen Verbindung bestehen bleibt, und dadurch eine Schnittkontur am Blechbauteil erzeugt wird. Dadurch kann ein Blechbauteil mit einem zumindest teilbereichsweise geschlossenen Querschnitt mit einer definierten Rand- bzw. Schnittkontur im Bereich der stoffschlüssig miteinander verbundenen Blechteile hergestellt werden, welche nicht unbedingt bzw. gar nicht abhängig sind von der Randkontur der bereitgestellten Blechplatinen vor der Formgebung zu den Blechteilen.

Nach dem Schneiden wird in einem zweiten Schritt die Schnittkontur an dem Blechbauteil thermisch beaufschlagt. Die thermische Beaufschlagung kann die Schnittkontur positiv beeinflussen, da unter Einwirkung von Wärme/respektive Temperatur die Schnittkontur oder Teile hiervon angeschmolzen und/oder das Gefüge verändert werden, so dass eine filigrane und ästhetische Anmutung in der Schnittkontur hergestellt werden kann.

Die thermische Beaufschlagung ("Glätten") dient insbesondere dazu, minimale Fehlstellen wie Löcher und/oder Poren aus dem stoffschlüssigen Verbindungsvorgang und/oder die minimalen Unebenheiten aus dem Schneidvorgang zu korrigieren.

Das erste Blechteil kann mittels beliebigen bzw. kombinierbaren Formgebungsverfahren in einem oder mehreren Teilschritten aus einer Blechplatine erzeugt werden. Neben einem beispielsweise tiefziehartigen Formgebungsschritt kann auch eine mehrstufige Formgebung beispielsweise ein Prägen des zu erstellenden Bodens und Hochstellen bzw. Abstellen der zu erstellenden Zargen umfassen (Prägen und Hochstellen bzw. Prägen und Abkanten). Denkbar sind auch beliebige Kombinationen aus Abkanten und/oder Biegen und/oder (Ver-) Prägen in einer oder in mehreren folgenden Operationen. Das durchgeführte Tiefziehen kann beispielsweise einstufig oder mehrstufig ausgeführt werden. Im Wesentlichen werden flanschbehaftete Blechteile erzeugt. Auch das mindestens zweite Blechteil kann bei Bedarf entsprechend aus einer Blechplatine umgeformt sein. Das zweite Blechteil kann aber auch im Wesentlichen eben (ungeformt) ausgeführt sein und quasi als Schließblech dienen, um ein Blechbauteil mit einem zumindest teilbereichsweise geschlossenen Querschnitt herstellen zu können. Auch wenn das mindestens zweite Blechteil keine klassische Ausgestaltung aus Boden, Zargen und Flansche aufweist, ist jedoch der Kontaktbereich des zweiten Blechteils zum ersten Blechteil als Flansch(e) zu verstehen.

Bei Bedarf können auch mehr als zwei Blechteile verwendet werden.

Das Blechbauteil kann mindestens eine Längserstreckung oder auch mehrere Erstreckungen aufweisen, je nach Ausführungsform des Blechbauteils, beispielsweise als Rahmen mit zwei Längserstreckungen und zwei Quererstreckungen, etc.

Unter einem zumindest teilbereichsweise geschlossenen Querschnitt ist zu verstehen, dass das Blechbauteil entlang mindestens einer Erstreckung (Längserstreckung) in einem Abschnitt oder in mehreren Abschnitten respektive (Teil-)Bereichen einen profilartigen, geschlossenen Querschnitt aufweist. Der geschlossene Querschnitt kann auch durchgehend entlang mindestens einer Erstreckung verlaufen.

Die stoffschlüssige Verbindung zwischen den Blechteilen kann entlang mindestens einer Erstreckung (Längserstreckung) des Blechbauteils in einem Abschnitt oder in mehreren Abschnitten respektive (Teil-)Bereichen vorgesehen sein. Die stoffschlüssige Verbindung kann auch durchgehend entlang mindestens einer Erstreckung verlaufen, beispielsweise in Form mindestens einer Verbindungsnaht (pro Seite).

Die Schnittkontur an dem Blechbauteil kann entlang mindestens einer Erstreckung (Längserstreckung) des Blechbauteils in einem Abschnitt oder in mehreren Abschnitten respektive (Teil)Bereichen vorgesehen sein analog zur stoffschlüssigen Verbindung. Die Schnittkontur kann auch durchgehend entlang mindestens einer Erstreckung verlaufen.

Weitere vorteilhafte Ausgestaltungen und Weiterbildungen gehen aus der nachfolgenden Beschreibung hervor. Ein oder mehrere Merkmale aus den Ansprüchen, der Beschreibung wie auch der Zeichnung können mit einem oder mehreren anderen Merkmalen daraus zu weiteren Ausgestaltungen der Erfindung verknüpft werden. Es können auch ein oder mehrere Merkmale aus den unabhängigen Ansprüchen durch ein oder mehrere andere Merkmale verknüpft werden.

Gemäß einer Ausführung des erfindungsgemäßen Verfahrens wird die stoffschlüssige Verbindung mittels Laser erzeugt. Die Verwendung eines Lasers zum stoffschlüssigen Verbinden (Schweißen) kann gezielt auf die im Wesentlichen überlappenden Flansche der beiden Blechteile gerichtet werden. Durch die Verwendung eines Lasers kann der die stoffschlüssige Verbindung umgebende Bereich (Wärmeeinflusszone) klein gehalten werden. Alternativ wären auch das Kleben oder Löten als Techniken zum stoffschlüssigen Verbinden denkbar. Denkbar ist auch, den Laser mit einer oszillierenden Bewegung zur Erzeugung der stoffschlüssigen Verbindung zu führen. Die oszillierende Bewegung kann eine Amplitude in Vorschubrichtung und/oder eine Amplitude quer zur Vorschubrichtung umfassen.

Gemäß einer Ausführung des erfindungsgemäßen Verfahrens wird die Schnittkontur mittels Laser erzeugt. Die Verwendung eines Lasers zum Schneiden der Schnittkontur lässt einen im Vergleich zum mechanischen Schneiden, beispielsweise Stanzen, filigraneren Schnitt zu. Ein Laser kann zudem individuell angesteuert werden, so dass jede beliebige Schnittkontur erzeugt werden kann und ist nicht verschleißanfällig.

Gemäß einer Ausführung des erfindungsgemäßen Verfahrens wird die Schnittkontur mittels Laser thermisch beaufschlagt. Alternativ können auch andere Wärmequellen verwendet werden, insbesondere Wärmequellen die fokussierend auf einen bestimmten Bereich (Schnittkontur) einstellbar sind. Der Laser wird mit beispielsweise mit einem Lateralwinkel zwischen 15° und 90°, insbesondere zwischen 30° und 85° eingestellt, um vorzugsweise eine saubere, glatte Verbindungsnaht erzeugen zu können. Bevorzugt kann alternativ oder ergänzend auch die Verwendung eines Schutzgases zu einer guten, glatten Verbindungsnaht führen. Denkbar ist auch, den Laser mit einer oszillierenden Bewegung zur thermischen Beaufschlagung zu führen. Die oszillierende Bewegung kann eine Amplitude in Vorschubrichtung und/oder eine Amplitude quer zur Vorschubrichtung umfassen.

Insbesondere kann die Vorschubgeschwindigkeit bei der thermischen Beaufschlagung um mindestens 20% im Vergleich zur Vorschubgeschwindigkeit bei der stoffschlüssigen Verbindung und/oder beim Schneiden, vorzugsweise um mindestens 40%, bevorzugt um mindestens 60% reduziert werden.

Gemäß einer Ausführung des erfindungsgemäßen Verfahrens wird für das erste Blechteil eine Blechstärke kleiner oder gleich 3 mm verwendet. Insbesondere kann auch das zweite Blechteil eine Blechstärke kleiner oder gleich 3 mm aufweisen. Je niedriger die Blechstärke, umso mehr Potential ist für Leichtbau durch Senkung der Blechstärke je nach Ausführung und Dimension des zu erstellenden zumindest teilbereichsweise geschlossenen Blechbauteils möglich. Die Blechstärke der einzelnen Blechplatinen kann insbesondere auf maximal 1,5 mm, vorzugsweise auf maximal 1,2 mm, bevorzugt auf maximal 0,8 mm reduziert werden.

Das erste wie auch das zweite Blechbauteil können aus einem Stahlwerkstoff bestehen. Insbesondere kann ein Stahlwerkstoff mit einer Zugfestigkeit (Rₘ) größer 550 MPa, insbesondere größer 650 MPa, vorzugsweise größer 750 MPa verwendet werden. Alternativ können das erste und das zweite Blechteil aus einem Aluminiumwerkstoff bestehen. Des Weiteren ist bei der Verwendung von mindestens zwei Blechteilen auch eine Hybridlösung aus einem Stahlteil und einem Aluminiumteil denkbar. Bevorzugt wird ein Stahlwerkstoff mit einem organischen und/oder einem anorganischen Überzug beschichtet. Besonders bevorzugt wird ein Korrosionsschutzüberzug auf Zinkbasis über eine elektrolytische Beschichtung oder vorzugsweise über eine Schmelztauchbeschichtung aufgebracht. Wird der Zinküberzug vorzugsweise über eine Schmelztauchbeschichtung aufgebracht, weist der Zinküberzug folgende chemische Zusammensetzung in Gew.-% auf:
optional eines oder mehrerer Legierungselemente aus der Gruppe (Al, Mg):

| | | |
|---|---|---|
| Al | bis | 5,0, |
| Mg | bis | 5,0, |

Rest Zn und unvermeidbare Verunreinigungen. In dem Zn-basierten Überzug können neben Zink und unvermeidbaren Verunreinigungen zusätzliche Elemente wie Aluminium mit einem Gehalt bis zu 5,0 Gew.-% und/oder Magnesium mit einem Gehalt bis zu 5,0 Gew.-% in dem Überzug enthalten sein. Stahlbleche mit zinkbasiertem Überzug weisen einen sehr guten kathodischen Korrosionsschutz auf. Ist ein verbesserter Korrosionsschutz vorgesehen, weist der Überzug zusätzlich Magnesium mit einem Gehalt von mindestens 0,05 Gew.-%, insbesondere von mindestens 0,3 Gew.-%, vorzugsweise von mindestens 0,5 Gew.-% auf. Aluminium kann alternativ oder zusätzlich zu Magnesium mit einem Gehalt von mindestens 0,05 Gew.-%, insbesondere von mindestens 0,5 Gew.-%, vorzugsweise von mindestens 0,5 Gew.-% vorhanden sein.

Gemäß einer Ausführung des erfindungsgemäßen Verfahrens wird die stoffschlüssige Verbindung in einer Fixiervorrichtung durchgeführt, in welcher das erste Blechteil und/oder das zweite Blechteil zumindest teilbereichsweise aufgenommen und während des Verbindens fixiert werden. Insbesondere können in der Fixiervorrichtung beispielsweise die beim Umformen einer ersten Blechplatine zu einem ersten Blechteil eingebrachten Spannungen und/oder Rückfederung kompensiert werden, so dass über die Fixierung eine definierte Positionierung zum stoffschlüssigen Verbinden erfolgen kann. Des Weiteren kann insbesondere ein Wärmeverzug infolge einer wärmebedingten stoffschlüssigen Verbindung, vorzugsweise durch Verschweißen, durch die Fixierung im Wesentlichen verhindert werden.

Gemäß einer Ausführung des erfindungsgemäßen Verfahrens wird das Blechbauteil mit einem Lack beschichtet. Entweder wird nur ein oder mehrere Abschnitte des Blechbauteils lackiert. Vorzugsweise wird das Blechbauteil vollständig lackiert, das heißt, dass mindestens eine Schicht eines Lackes auf der Oberfläche des Blechbauteils aufgebracht wird, beispielsweise mittels Sprühlackieren oder Tauchlackieren. Durch die thermische Beaufschlagung der Schnittkontur an dem Blechbauteil in Kombination mit dem Lack kann eine besonders ästhetische und fehlerfreie Randkontur am Blechbauteil bereitgestellt werden.

Gemäß einer Ausführung des erfindungsgemäßen Verfahrens weist das Blechbauteil mindestens eine Längserstreckung auf, entlang welcher ein veränderlicher Querschnitt verläuft. Dadurch kann neben der Ästhetik auch positiv Einfluss auf Ergonomie und/oder Belastung genommen werden. Das Blechbauteil kann somit auch individuell mit unterschiedlichen Querschnitten ausgeführt sein.

Derart hergestellte zumindest teilbereichsweise geschlossene Blechbauteile finden im Bereich des Fahrzeugbaus, insbesondere für ein-, zwei- oder mehrrädrige Fahrzeuge, vorzugsweise für den Bau von Fahrrädern, bevorzugt für den Bau von Rahmen und/oder Gabeln, vorzugsweise für den Bau von Karossiere-, Fahrwerks- oder Anbauteilen im Automobil, Räder oder Teile hiervon; im Bereich des Möbelbaus; im Bereich des Bausektors; im Bereich des Flugzeugbaus, vorzugsweise für den Bau von Rumpf-, Fahrwerks oder Anbauteilen, bevorzugt für den Bau von Sitzkomponenten; im Sanitär-Bereich; für den Bau von Gehäusen für tragbare Gegenstände, vorzugsweise für Elektrogegenstände; im Bereich des Maschinen- und Anlagenbaus, im Verpackungsbereich Verwendung.

### Kurze Beschreibung der Zeichnungen (Brief Description of Drawings)

Im Folgenden wird die Erfindung anhand von Zeichnungen näher erläutert. Gleiche Teile sind mit gleichen Bezugszeichen versehen. Im Einzelnen zeigen:
- Fig. 1a, b, c: eine schematische Schnittdarstellung zu unterschiedlichen Zeitpunkten während der Durchführung des erfindungsgemäßen Verfahrens zur Herstellung eines Blechbauteils gemäß eines Ausführungsbeispiels, wobei a) den Zeitpunkt der stoffschlüssigen Verbindung, b) den Zeitpunkt des Schneidens und c) den Zeitpunkt der thermischen Beaufschlagung zeigen, und
- Fig. 2a, b: eine skizzierte Führung des Lasers zum stoffschlüssigen Verbinden der Blechteile a) und eine schematische Darstellung während des Verbindens der Blechteile mittels Laser b).

### Beschreibung der bevorzugten Ausführungsformen (Best Mode for Carrying out the Invention)

Aus Blechplatinen, die unterschiedlich und in ihrer Dimension abhängig von dem zu erzeugenden Blechbauteil (10) mit einem zumindest teilbereichsweise geschlossenen Querschnitt bereitgestellt werden können, werden ein erstes Blechteil (1) und optional mindestens ein zweites Blechteil (2) umgeformt. Das erste Blechteil (1) weist einen Boden (1.1), Zargen (1.2) und Flansche (1.3) auf. Auch das zweite Blechteil (2) kann einen Boden (2.1), Zargen (2.2) und Flansche (2.3) aufweisen, falls es entsprechend umgeformt wird. Die Umformung zu Blechteilen (1, 2) kann mit beliebigen Techniken und in einer oder mehreren Stufen innerhalb eines oder mehrerer Werkzeuge erfolgen. Das Blechteil (1) weist eine Blechstärke kleiner oder gleich 3 mm auf. Das erste und/oder das zweite Blechteil (1, 2) kann aus einem Stahlwerkstoff oder aus einem Aluminiumwerkstoff bestehen.

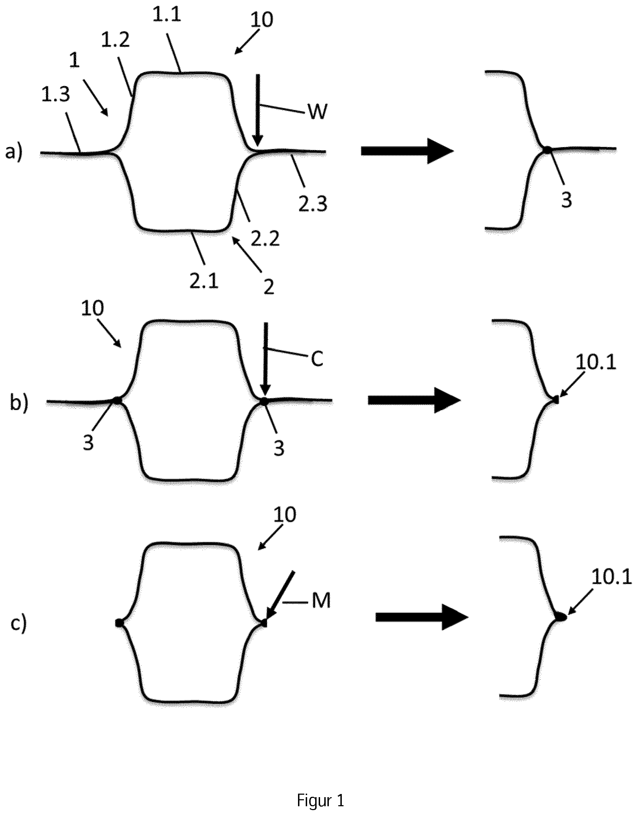

Nach der Bereitstellung des ersten und des mindestens zweiten Blechteils (1, 2) werden die beiden Blechbauteile (1, 2) derart angeordnet, dass sie zumindest teilbereichsweise über ihre Flansche (1.3, 2.3) unter Ausbildung eines zumindest teilbereichsweise geschlossenen Querschnitts in Kontakt gelangen und zwischen den beiden Blechteilen (1, 2) eine stoffschlüssige Verbindung (3) erzeugt wird, s. Figur 1a) links. Die stoffschlüssige Verbindung (3) wird beispielsweise in einer nicht dargestellten Fixiervorrichtung durchgeführt, in welcher das erste Blechteil (1) und/oder das zweite Blechteil (2) zumindest teilbereichsweise aufgenommen und während des Verbindens fixiert werden bzw. sind. Die Darstellung in Figur 1a) rechts, zeigt nur die rechte Teilschnittansicht aus Fig. 1a) links, nach dem stoffschlüssigen Verbinden der beiden Blechteile (1, 2) zu einem Blechbauteil (10) mit einem zumindest teilbereichsweise geschlossenen Querschnitt.

Nach dem Erzeugen der stoffschlüssigen Verbindung (3) werden die Flansche (1.3, 2.3) zumindest teilbereichsweise unter Beibehaltung der stoffschlüssigen Verbindung (3) abgeschnitten, derart, dass angrenzend an oder im Bereich der stoffschlüssigen Verbindung (3) eine Schnittkontur (10.1) an dem Blechbauteil (10) erzeugt wird. Insbesondere kann das Schneiden in der nicht dargestellten Fixiervorrichtung durchgeführt werden, in welcher bereits das stoffschlüssige Verbinden erfolgt ist, oder aber das Blechbauteil (10) wird alternativ in eine andere nicht dargestellte Vorrichtung, beispielsweise in eine Schneidvorrichtung überführt. Vorzugsweise erfolgt das Schneiden in der gleichen Vorrichtung, in welcher die stoffschlüssige Verbindung (3) zwischen den beiden Blechteilen (1, 2) erzeugt wurde, wobei der gleiche Laser oder ein anderer nicht dargestellter Laser (C) die Flansche (1.3, 2.3) zumindest teilbereichsweise abschneidet, s. Figur 1b) links. Die Darstellung in Figur 1b) rechts, zeigt nur die rechte Teilschnittansicht aus Fig. 1b) links, nach dem Schneiden, wobei die Schnittkontur (10.1) an dem Blechbauteil (10) gut zu erkennen ist.

Nach dem Schneiden wird die Schnittkontur (10.1) an dem Blechbauteil (10) thermisch beaufschlagt. Insbesondere kann auch die thermische Beaufschlagung in der nicht dargestellten (Fixier-)Vorrichtung durchgeführt werden, in welcher bereits das stoffschlüssige Verbinden und/oder das Schneiden erfolgt ist, oder aber das Blechbauteil (10) wird alternativ in eine andere nicht dargestellte Vorrichtung, beispielsweise in eine Wärmebehandlungsvorrichtung überführt. Vorzugsweise erfolgt die thermische Beaufschlagung in der gleichen Vorrichtung, in welcher die stoffschlüssige Verbindung (3) zwischen den beiden Blechteilen (1, 2) und das Schneiden zur Erzeugung der Schnittkontur (10.1) durchgeführt wurde, wobei der gleiche Laser oder ein anderer nicht dargestellter Laser (M) die Schnittkontur (10.1) thermisch beaufschlagt und vorzugsweise glättet, s. Figur 1c) links. Die Darstellung in Figur 1c) rechts, zeigt nur die rechte Teilschnittansicht aus Fig. 1c) links, nach der thermischen Beaufschlagung.

Je nach Ausgestaltung des zu erstellenden Blechbauteils (10) kann das Blechbauteil (10) mindestens eine (Längs-)Erstreckung aufweisen, entlang welcher das Blechbauteil (10) zumindest teilbereichsweise einen geschlossenen Querschnitt oder durchgehend entlang der Erstreckung einen geschlossenen Querschnitt aufweist. Insbesondere kann das Blechbauteil (10) einen entlang mindestens einer (Längs-)Erstreckung veränderlichen Querschnitt aufweisen.

Beispielhaft wurde ein zumindest teilbereichsweise geschlossenes Blechbauteil (10) für die Verwendung eines Teilbereichs eines Fahrzeugrahmens, hergestellt, wobei eine erste und zweite Blechplatine aus einem Stahlwerkstoff mit jeweils einer Dicke von 0,7 mm und einer Zugfestigkeit von 600 MPa bereitgestellt wurden und mittels Tiefziehen zwei Blechteile (1, 2) in Form von flanschbehafteten Halbschalen, jeweils mit Boden (1.1, 2.1), Zargen (1.2, 1.2) und Flansche (1.3, 2.3) hergestellt wurden. In einer nicht dargestellten Fixiervorrichtung, welche Aufnahmen zur teilbereichsweise Aufnahme des ersten Blechteils (1) aufwies, wurde das erste Blechteil (1) eingelegt. Das zweite Blechteil (2) wurde derart auf dem ersten Blechteil (1) angeordnet, dass sie zumindest teilbereichsweise über ihre Flansche (1.3, 2.3) unter Ausbildung eines zumindest teilbereichsweise geschlossenen Querschnitts in Kontakt gelangten. Die Fixiervorrichtung wies entsprechende Mittel auf, welche lokal auf das erste und das zweite Blechteil (1, 2) einwirkten, um diese zum stoffschlüssigen Verbinden in der erforderlichen Position zu halten.

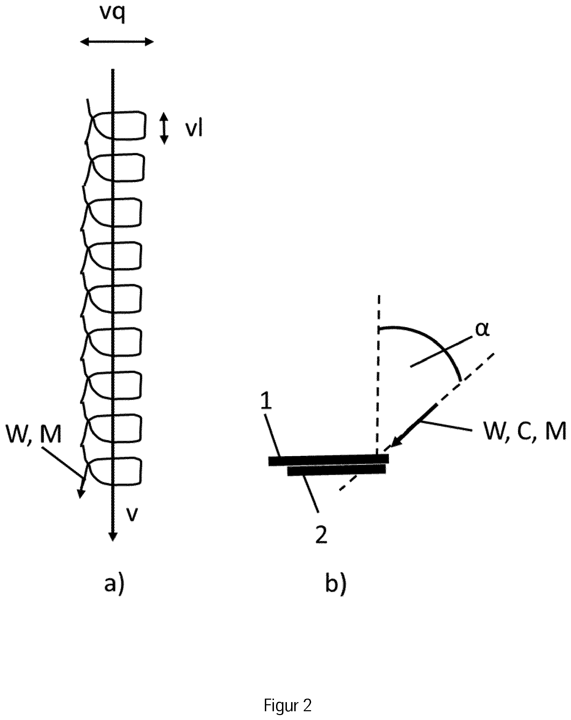

In der nichtdargestellten Fixiervorrichtung kam ein nicht dargestellter Laser (W) zum stoffschlüssigen Verbinden der Blechteile (1, 2) zum Einsatz. Der Laser kann mit einer Laserleistung zwischen 500 und 3000 W und mit einem Vorschub (v) zwischen 2 bis 5 m/min betrieben werden. Der Laser (W) kann bei Bedarf mit einer oszillierenden Bewegung (vl, vq) zur stoffschlüssigen Verbindung der Blechteile (1, 2) geführt werden, wobei abhängig von der Schweißaufgabe eine Amplitude (vq) und/oder eine Amplitude (vl) eingestellt werden kann, s. Figur 2a). Der Lateralwinkel (α) des Lasers (W) beträgt beispielsweise 0°, s. Figur 2b). Der Lateralwinkel (α) kann bei Bedarf und Zugänglichkeit zwischen -25° und +25° eingestellt werden.

Nach dem Erzeugen der stoffschlüssigen Verbindung (3) wurden die Flansche (1.3, 2.3) zumindest teilbereichsweise unter Beibehaltung der stoffschlüssigen Verbindung (3) abgeschnitten, derart, dass im Bereich der stoffschlüssigen Verbindung (3) eine Schnittkontur (10.1) an dem Blechbauteil (10) erzeugt wurde. Zum Schneiden kam derselbe Laser zum Einsatz, welcher bereits zum Schweißen verwendet wurde. Der Laser (C) kann mit einer Laserleistung zwischen 2000 bis 5000 W und mit einem Vorschub (v) zwischen 0,5 bis 10 m/min betrieben werden. Der Lateralwinkel (α) des Lasers beträgt beispielsweise 0°, s. Figur 2b). Der Lateralwinkel (α) kann bei Bedarf und Zugänglichkeit zwischen -45° und +45° eingestellt werden.

Nach dem Schneiden wurde die Schnittkontur (10.1) thermisch beaufschlagt. Zur thermischen Beaufschlagung kam derselbe Laser zum Einsatz, welcher bereits zum Schweißen und Schneiden verwendet wurde. Der Laser (M) kann mit einer Laserleistung zwischen 800 und 1000 W und mit einem Vorschub zwischen 0,5 bis 5 m/min betrieben werden. Der Lateralwinkel (α) des Lasers (M) beträgt beispielsweise 45°, s. Figur 2b). Der Lateralwinkel (α) kann bei Bedarf und Zugänglichkeit zwischen 15° und 90° eingestellt werden. Denkbar ist auch, den Laser mit einer oszillierenden Bewegung zur thermischen Beaufschlagung zu führen. Die oszillierende Bewegung kann eine Amplitude in Vorschubrichtung und/oder eine Amplitude quer zur Vorschubrichtung umfassen, vgl. Figur 2a).

Die stoffschlüssige Verbindung, das Schneiden und die thermische Beaufschlagung können ohne oder jeweils mit Schutzgas durchgeführt werden.

Nach der thermischen Beaufschlagung wurde das Blechbauteil (10) in Rahmenform aus der Fixiervorrichtung entnommen, welches weiteren Untersuchungen zugeführt wurde. Das Blechbauteil (10) wurde in mehrere Teilbauteile geschnitten und im Schliff mikroskopisch untersucht. Es konnte gezeigt werden, dass eine im Wesentlichen fehlerfreie durchgehende Verbindungsnaht (3) hergestellt werden konnte.

Die beschriebenen Merkmale sind alle, soweit technisch möglich und durch den Schutzumfang der Ansprüche definiert, miteinander kombinierbar.

Vorzugsweise kann nur ein Laser verwendet werden, welcher zum Schweißen im Schweißmodus, zum Schneiden im Schneidmodus und zum thermischen Beaufschlagen im Wärmebehandlungsmodus betrieben wird. Um die Wirtschaftlichkeit zu steigern, können zwei Laser verwendet werden, wobei die unterschiedlichen Modi zeitgleich durchgeführt und/oder mehrere Vorrichtungen zur Fixierung verwendet werden können, um die Taktzeit zur Herstellung eines Blechbauteils verkürzen zu können.

## Patentansprüche

1. Verfahren zur Herstellung eines Blechbauteils (10) mit einem zumindest teilbereichsweise geschlossenen Querschnitt, welches mindestens zwei über eine stoffschlüssige Verbindung (3) miteinander verbundene Blechteile (1, 2) umfasst, wobei das Verfahren folgende Schritte umfasst:
- Bereitstellen eines ersten Blechteils (1) und mindestens eines zweiten Blechteils (2), wobei das erste Blechteil (1) und/oder das zweite Blechteil (2) einen Boden (1.1, 2.1), Zargen (1.2, 2.2) und Flansche (1.3, 2.3) aufweist,
- Anordnen der beiden Blechteile (1, 2) derart, dass sie zumindest teilbereichsweise über ihre Flansche (1.3, 2.3) unter Ausbildung eines zumindest teilbereichsweise geschlossenen Querschnitts in Kontakt gelangen und Erzeugen einer stoffschlüssigen Verbindung (3) zwischen den beiden Blechteilen (1, 2),
- nach dem Erzeugen der stoffschlüssigen Verbindung (3) die Flansche (1.3, 2.3) zumindest teilbereichsweise unter Beibehaltung der stoffschlüssigen Verbindung (3) abgeschnitten werden, derart, dass angrenzend an oder im Bereich der stoffschlüssigen Verbindung (3) eine Schnittkontur (10.1) an dem Blechbauteil (10) erzeugt wird,
**dadurch gekennzeichnet, dass** die Schnittkontur (10.1) an dem Blechbauteil (10) anschließend thermisch beaufschlagt wird, wobei die thermische Beaufschlagung dazu dient, minimale Fehlstellen wie Löcher und/oder Poren aus dem stoffschlüssigen Verbindungsvorgang zu korrigieren.

2. Verfahren nach Anspruch 1, wobei die stoffschlüssige Verbindung (3) mittels Laser (W) erzeugt wird.

3. Verfahren nach Anspruch 2, wobei der Laser (W) mit einer oszillierenden Bewegung (vi, vq) zur Erzeugung der stoffschlüssigen Verbindung (3) geführt wird.

4. Verfahren nach einem der vorgenannten Ansprüche, wobei die Schnittkontur (10.1) mittels Laser (C) erzeugt wird.

5. Verfahren nach einem der vorgenannten Ansprüche, wobei die Schnittkontur (10.1) mittels Laser (M) thermisch beaufschlagt wird.

6. Verfahren nach einem der vorgenannten Ansprüche, wobei für das erste Blechteil (1) und/oder das zweite Blechteil (2) eine Blechstärke kleiner oder gleich 3 mm verwendet wird.

7. Verfahren nach einem der vorgenannten Ansprüche, wobei die stoffschlüssige Verbindung (3) in einer Fixiervorrichtung durchgeführt wird, in welcher das erste Blechteil (1) und/oder das zweite Blechteil (2) zumindest teilbereichsweise aufgenommen und während des Verbindens fixiert werden.

8. Verfahren nach einem der vorgenannten Ansprüche, wobei das Blechbauteil (10) mit einem Lack beschichtet wird.

9. Verfahren nach einem der vorgenannten Ansprüche, wobei das Blechbauteil (10) mindestens eine Längserstreckung aufweist, entlang welcher ein veränderlicher Querschnitt verläuft.

## Claims

1. A method for producing a sheet-metal component (10) having a cross-section which is closed at least in partial regions and which comprises at least two sheet-metal parts (1, 2) joined together by way of a material-formed join (3), wherein the method comprises the following steps:
- providing a first sheet-metal part (1) and at least a second sheet-metal part (2), wherein the first sheet-metal part (1) and/or the second sheet-metal part (2) has/have a base (1.1, 2.1), frames (1.2, 2.2) and flanges (1.3, 2.3),
- arranging the two sheet-metal parts (1, 2) such that they come into contact at least in partial regions via their flanges (1.3, 2.3), forming a cross-section which is closed at least in partial regions, and producing a material-formed join (3) between the two sheet-metal parts (1, 2),
- after the production of the material-formed join (3) the flanges (1.3, 2.3) are cut off at least in partial regions while maintaining the material-formed join (3), such that adjoining or in the region of the material-formed join (3) a cutting contour (10.1) is produced on the sheet-metal component (10),
**characterised in that** the cutting contour (10.1) on the sheet-metal component (10) is then subjected to thermal treatment, wherein the thermal treatment serving to correct minimal defects such as holes and/or pores from the material-formed joining process.

2. A method according to claim 1, wherein the material-formed join (3) is produced by means of laser (W).

3. A method according to claim 2, wherein the laser (W) is guided with an oscillating movement (vi, vq) to produce the material-formed join (3).

4. A method according to one of the aforementioned claims, wherein the cutting contour (10.1) is produced by means of laser (C).

5. A method according to one of the aforementioned claims, wherein the cutting contour (10.1) is subjected to thermal treatment by means of laser (M).

6. A method according to one of the aforementioned claims, wherein a sheet-metal thickness of less than or equal to 3 mm is used for the first sheet-metal part (1) and/or the second sheet-metal part (2).

7. A method according to one of the aforementioned claims, wherein the material-formed join (3) is carried out in a fixing device in which the first sheet-metal part (1) and/or the second sheet-metal part (2) at least in partial regions is/are received and fixed during joining.

8. A method according to one of the preceding claims, wherein the sheet-metal component (10) is coated with a painted coating.

9. A method according to one of the aforementioned claims, wherein the sheet-metal component (10) has at least one longitudinal extent along which a changeable cross-section runs.

## Revendications

1. Procédé de fabrication d'un composant en tôle (10) avec une section transversale fermée au moins par endroits, qui comprend au moins deux pièces de tôle (1, 2) reliées entre elles par une liaison de matière (3), le procédé comprenant les étapes suivantes :
- mise à disposition d'une première pièce de tôle (1) et d'au moins une deuxième pièce de tôle (2), la première pièce de tôle (1) et/ou la deuxième pièce de tôle (2) étant munie d'un fond (1.1, 2.1), d'ailes (1.2, 2.2) et de brides (1.3, 2.3),
- disposition des deux pièces de tôle (1, 2) de telle sorte qu'elles soient en contact au moins par endroits par le biais de leurs brides (1.3, 2.3) en formant une section transversale fermée au moins par endroits, et création d'une liaison de matière (3) entre les deux pièces de tôle (1, 2),
- après la création de la liaison de matière (3), coupure des brides (1.3, 2.3) au moins par endroits en conservant la liaison de matière (3), de telle sorte qu'un contour de coupe (10.1) est réalisé sur le composant en tôle (10) à proximité ou au niveau de la zone de la liaison de matière (3),
**caractérisé en ce que** le contour de coupe (10.1) sur le composant en tôle (10) est ensuite soumis à un traitement thermique, le traitement thermique servant à corriger des défauts minimes tels que des trous et/ou des pores résultant du processus d'assemblage par liaison de matière.

2. Procédé selon la revendication 1, dans lequel la liaison de matière (3) est produite au moyen d'un laser (W).

3. Procédé selon la revendication 2, dans lequel le laser (W) est guidé avec un mouvement oscillant (vi, vq) pour générer la liaison de matière (3).

4. Procédé selon l'une des revendications précédentes, dans lequel le contour de coupe (10.1) est produit au moyen d'un laser (C).

5. Procédé selon l'une des revendications précédentes, dans lequel le contour de coupe (10.1) est soumis à un traitement thermique au moyen d'un laser (M).

6. Procédé selon l'une des revendications précédentes, dans lequel on utilise une épaisseur de tôle inférieure ou égale à 3 mm pour la première pièce de tôle (1) et/ou la deuxième pièce de tôle (2).

7. Procédé selon l'une des revendications précédentes, dans lequel la liaison de matière (3) est réalisée dans un dispositif de fixation dans lequel la première pièce de tôle (1) et/ou la deuxième pièce de tôle (2) sont reçues au moins par endroits et sont fixées pendant la réalisation de la liaison.

8. Procédé selon l'une des revendications précédentes, dans lequel le composant en tôle (10) est revêtu d'une peinture.

9. Procédé selon l'une des revendications précitées, dans lequel le composant en tôle (10) présente au moins une extension longitudinale le long de laquelle s'étend une section transversale variable.
